# EUROPEAN PATENT SPECIFICATION

(11) **EP 2 696 429 B1**
(45) Date of publication and mention of the grant of the patent: **03.06.2015**
(21) Application number: 13171942.9
(22) Date of filing: 14.06.2013
(51) Int. Cl.: H01M 10/04

(54) **Compressible core for a wound electrode assembly**
Komprimierbaren Zentrumstift für eine gewickelte Elektrodenanordnung
Broche centrale comprimable pour un ensemble d' électrodes enroulé

(30) Priority: 08.08.2012 US 201261681045 P; 17.05.2013 US 201313897230
(43) Date of publication of application: 12.02.2014
(73) Proprietor: Samsung SDI Co., Ltd., Gyeonggi-do 449-577 (KR)
(72) Inventor: Kim, Dae-Kyu, Yongin-si (KR)
(74) Representative: Gulde & Partner

(56) References cited:
- JP-A- H11 224 689
- US-A- 5 047 068

## Description

### BACKGROUND OF THE INVENTION

### (a) Field of the Invention

The present invention relates to a rechargeable battery. More particularly, the present invention relates to a rechargeable battery of which a structure of a core inserted into an electrode assembly is electrode assembly is improved.

### (b) Description of the Related Art

A rechargeable battery is a battery that can be repeatedly charged and discharged, unlike a primary battery. A small sized rechargeable battery is used as a power supply for small electronic devices such as cellular phones, notebook computers, and camcorders, while a medium or large sized rechargeable battery is used as a power supply for driving motors in hybrid vehicles and the like. The rechargeable battery may be used in small electronic devices as a single-cell battery or in motor-driving power sources, etc. as a battery module where a plurality of cells is electrically connected. The rechargeable battery module is formed by connecting electrode terminals through a bus bar. An electrode assembly including a positive electrode and a negative electrode is provided in the rechargeable battery, and therefore is it very important to stably support the shape of the electrode assembly. When the electrode assembly is deformed, an unstable reaction occurs in the rechargeable battery and thus an output may be deteriorated or the rechargeable battery may explode. Particularly, when a center pin in the electrode assembly is deformed in a high-temperature operation condition, the electrode assembly is deformed, thereby deteriorating performance of the rechargeable battery.

US5047068 relates to a spring having turned-in edges and being held in a compressed state when it is wrapped about a split mandrel. An electrode can then be wrapped around the spring and inserted in the cell container. By pushing off the mandrel the spring expands. The released spring forces the electrode into close contact with the separator and the second electrode.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a core that can prevent deformation of an electrode assembly. The core according to the invention comprises a spring member and is characterized by at least one pressing member pressing the spring member into a compressed state, wherein said pressing member is formed at least partly of a material which dissolves in an electrolyte solution.

In an embodiment the spring member is bent in a larger curvature by the pressing member.

The spring member can be formed in a shape of a hollow pipe having an inner space and a cutout portion extended in a length direction of the spring member.

The cut-out portion of the spring member can be formed by a first side end of the spring member formed at one external circumferential surface and extended in the length direction and a second side end of the spring member separated from the first side end and extended in the length direction.

The pressing member can surround the external circumference of the spring member.

The material which dissolves in an electrolyte solution can be a polymer material which comprises polystyrene.

The polystyrene can be oriented polystyrene.

The pressing member can be formed as a tape having adhesive interior and exterior surface, the adhesive interior surface being attached to the spring member and the adhesive exterior surface being dedicated to attachment to the electrode assembly.

Or the pressing member may comprise a polymer member which does not react to the electrolyte solution and a dissolving unit extending along a length direction of the pressing member, the dissolving unit comprising the material which dissolves in an electrolyte solution.

Or the pressing member may comprise a polymer member which is formed of an elastic and flexible film and does not react to an electrolyte solution, and at least one support member comprising the material which dissolves in an electrolyte solution and being formed in the shape of a band partially surrounding the polymer member.

The pressing member can be formed in the shape of a molded pipe.

A notch may extend along a length direction of the pressing member.

The core according to the invention can be inserted into an electrode assembly comprised by a rechargeable battery which further comprises a case having a space in which the electrode assembly is installed, the electrode assembly including a positive electrode, a negative electrode and a separator. Since the core is provided in the electrode assembly, the electrode assembly can be stably supported, thereby preventing deformation of the electrode assembly.

In an embodiment, the positive electrode, the separator, and the negative electrode are stacked and wound in a spiral or prismatic shape such that a space is formed in the center of the electrode assembly, wherein the core is provided in said space.

### BRIEF DESCRIPTION OF THE DRAWINGS

FIG. 1 is a cut-out perspective view of a rechargeable battery according to an exemplary embodiment of the present invention.
FIG. 2 is a cross-sectional view of a rechargeable battery according to a first exemplary embodiment of the present invention.
FIG. 3 is a perspective view of a core according to the first exemplary embodiment of the present invention.
FIG. 4 is a cross-sectional view of the core according to the first exemplary embodiment of the present invention.
FIG. 5 is a cross-sectional view of the core in the open state according to the first exemplary embodiment of the present invention.
FIG. 6 is a cross-sectional view of a core according to a second exemplary embodiment of the present invention.
FIG. 7 is a cross-sectional view of the core in the open state according to the second exemplary embodiment of the present invention.
FIG. 8 is a perspective view of a core according to a third exemplary embodiment of the present invention.
FIG. 9 is a cross-sectional view of the core according to the third exemplary embodiment of the present invention.
FIG. 10 is a cross-sectional view of the core in the open state according to the third exemplary embodiment of the present invention.
FIG. 11 is a perspective view of a core according to a fourth exemplary embodiment of the present invention.
FIG. 12 is a cross-sectional view of the core according to the fourth exemplary embodiment of the present invention.
FIG. 13 is a cross-sectional view of the core in the open state according to the fourth exemplary embodiment of the present invention.
FIG. 14 is a perspective view of a core according to a fifth exemplary embodiment of the present invention.
FIG. 15 is a cross-sectional view of the core according to the fifth exemplary embodiment of the present invention.
FIG. 16 is a cross-sectional view of the core in the open state according to the fifth exemplary embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

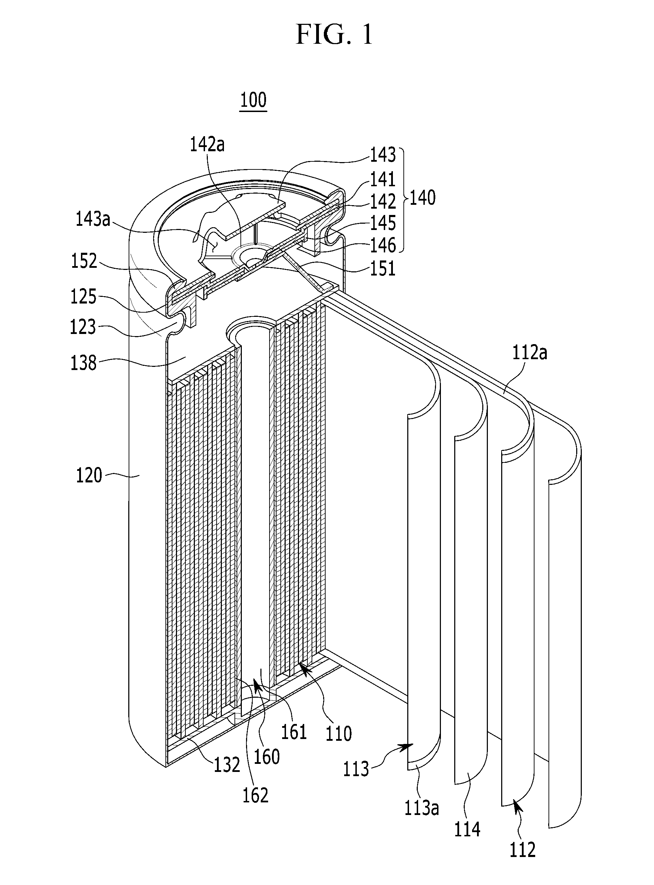

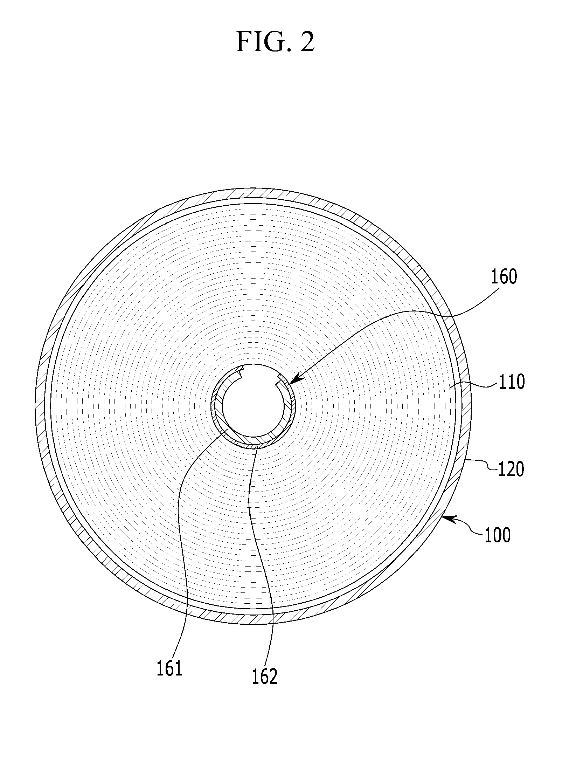

FIG. 1 is a cut-out perspective view of a rechargeable battery according to an exemplary embodiment of the present invention, and FIG. 2 is a cross-sectional view of a rechargeable battery according to a first exemplary embodiment of the present invention.

Referring to the drawing, a rechargeable battery 100 according to the present exemplary embodiment includes an electrode assembly 110 having a positive electrode 112 and a negative electrode 113 disposed, interposing a separator 114 therebetween and a case 120 where an opening is formed at one end to receive the electrode assembly 100 and an electrolyte solution.

In addition, a cap assembly 140 is provided through a gasket 152 to seal the case 120. In further detail, the case 120 is formed of a conductive metal such as aluminum, an aluminum alloy, or nickel-plated steel. The case 120 according to the present exemplary embodiment is formed in the shape of a cylinder having an inner space where the electrode assembly 110 is provided.

The cap assembly 140 in fit to the case 120 and clamped such that cap assembly 140 is fixed to the case 120, and during this process, a beading portion 123 and a clamping portion 125 are formed in the case 120.

Although the electrode assembly 110 according to the exemplary embodiment is a cylindrical type in which the positive electrode 112, the separator 114, and the negative electrode 113 are stacked and wound in a spiral shape, the structure of the electrode assembly 110 is not limited thereto and the electrode assembly 110 may have other structures such as a prismatic shape, etc.

A space is formed in the center of the electrode assembly 110 and a core 160 is provided in the space for maintaining the cylindrical shape of the electrode assembly 110.

In addition, a positive electrode uncoated region 112a where a positive active material is not coated is formed at an upper end of the positive electrode 112, such that the positive electrode uncoated region 112a is electrically connected with a positive electrode current collecting plate 138. Further, a negative electrode uncoated region 113a where a negative active material is not coated is formed at a lower end of the negative electrode 113, such that the negative electrode uncoated region 113a is electrically connected with a negative electrode current collecting plate 132.

In the exemplary embodiment, the positive electrode current collecting plate 138 is installed at an upper portion of the electrode assembly and the negative electrode current collecting plate 132 is installed at a lower portion of the electrode assembly, but the present invention is not limited thereto, and the positive electrode current collecting plate 138 may be installed at the lower portion of the electrode assembly and the negative electrode current collecting plate 132 may be installed at the upper portion of the electrode assembly.

The cap assembly 140 includes a cap plate 143 where an exhaust hole 143a is formed and a vent plate 142 that is provided below the cap plate 143 and broken at a predetermined pressure condition to discharge gas. The vent plate 142 disconnects an electric connection between the electrode assembly 110 and the cap plate 143 under the predetermined pressure condition.

A positive temperature coefficient element 141 is provided between the cap plate 143 and the vent plate 142, which is a device of which electric resistance is increased to almost infinite when a temperature exceeds a predetermined temperature, and when the temperature of the rechargeable battery 100 exceeds a predetermined temperature, the positive temperature coefficient element 141 blocks flow of a charging current and flow of a discharging current.

The vent plate 142 protrudes downward, and a sub-plate 147 is attached to a bottom side of the protruded portion of the vent portion 142.

A middle plate 146 electrically connected with the electrode assembly 110 through a lead portion 151 is formed at an edge of the vent plate 142, and an insulator 145 is provided between the middle late 146 and the vent plate 142 for insulation between the middle plate 146 and the vent plate 142.

As shown in FIG. 2, the core 160 is inserted to the center of the electrode assembly 110 to support the shape of the electrode assembly 110.

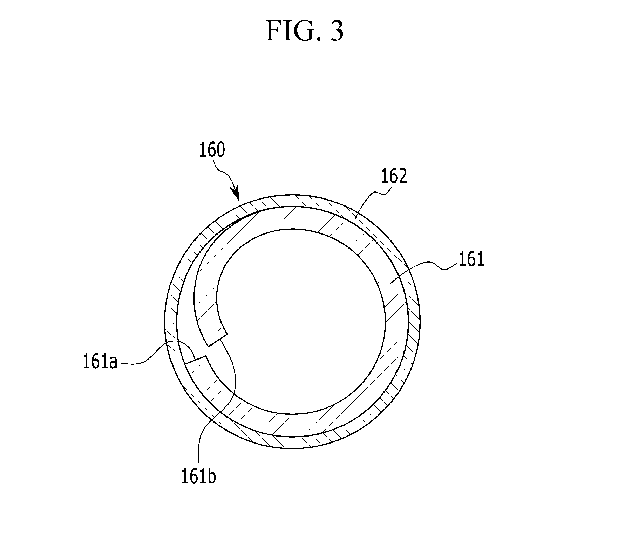

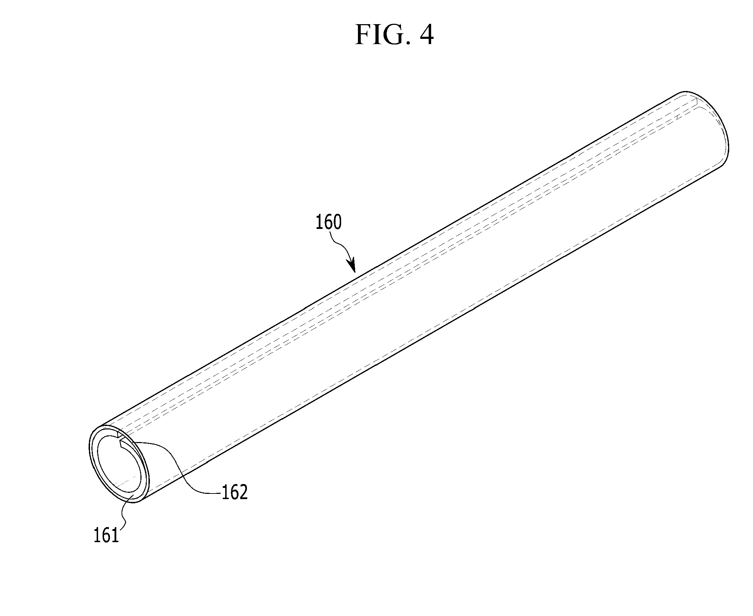

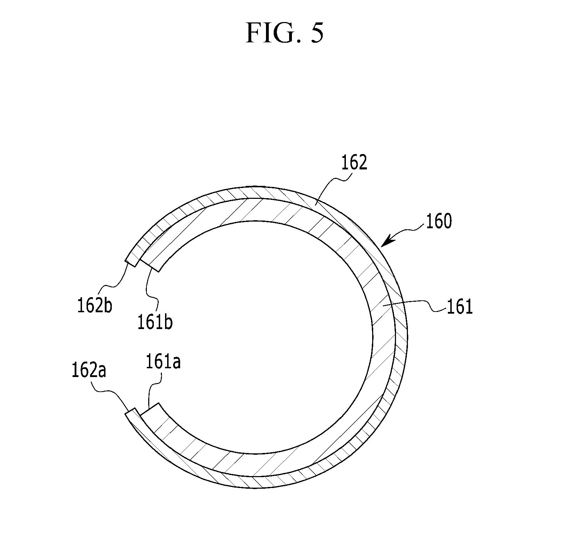

FIG. 3 is a perspective view of the core according to the first exemplary embodiment of the present invention, FIG. 4 is a cross-sectional view of the core according to the first exemplary embodiment of the present invention, and FIG. 5 is a cross-sectional view of the core in the open state according to the first exemplary embodiment of the present invention.

Referring to FIG. 3 to FIG. 5, the core 160 is formed in the shape of a cylindrical hollow pipe. The core 160 includes a spring member 161 having a cutout portion and a polymer member 162 surrounding the spring member 161.

The spring member 161 is formed in the shape of a pipe having an inner space, and a cutout portion formed extended in a length direction of the spring member 161 is formed in an external circumference. Accordingly, the spring member 161 includes a first side end 161a formed at one external circumferential surface and extended in a length direction of the spring member 161 and a second side end 161b separated from the first side end 161a and extended in the length direction of the spring member 161.

The polymer member 162 is formed to surround the spring member 161, and is formed of a polymer material dissolved in the electrolyte solution. The polymer member 162 according to the present exemplary embodiment is formed as a tape having adhesive interior and exterior surfaces, and accordingly, the interior surface of the polymer member 162 is attached to the spring member 161 and the exterior surface of the polymer member 162 is attached to the electrode assembly 110.

The polymer member 162 may be formed of a material including polysterene, and particularly may be formed of oriented polystyrene (OPS).

As shown in FIG. 4, the core 160 is inserted into the electrode assembly 110 while in the state that the spring member 161 is surrounded by the polymer member 162. In this case, the spring member 161 is pressed by the polymer member 162 and thus being in a compressed state.

For this, the polymer member 162 wholly surrounds the spring member 161, which is bent with a larger curvature by the polymer member 162.

As shown in FIG. 5, when the core 160 is inserted into the rechargeable battery 100 and thus contacts the electrolyte solution for a predetermined time period, the polymer member 162 is partially dissolved by the electrolyte solution such that strength of the polymer member 162 is decreased. When the strength of the polymer member 162 becomes weaker than an elastic force of the spring member 161, the polymer member 162 is torn and thus the spring member 161 cannot be supported.

In this case, a cap is formed in the polymer member 162, and a first external circumference end 162a and a second external circumference end 162b separated from the first external circumference end 162a are formed in the external circumference.

The spring member 161 is determined such that the gap between the first side end 161a and the second side end 161b is increased due to the breakage of the polymer member 162. In this case, the spring member 161 is spread with a smaller curvature than when being initially inserted and thus presses the electrode assembly 110.

In the case of a conventional core, the strength of the core is weakened as the internal temperature of the rechargeable battery is increased such that being deformed. However, according to the first exemplary embodiment, the deformation of the core 160 can be prevented because the core 160 includes the spring member 161 and the circularly core 160 is compressed and inserted, and then the compression force is released, and therefore the electrode assembly 110 can be further stably supported in the electrode assembly 110. In addition, since the polymer member 162 is attached to the spring member 161 and the electrode assembly 110, the polymer member 162 can support the spring member 161.

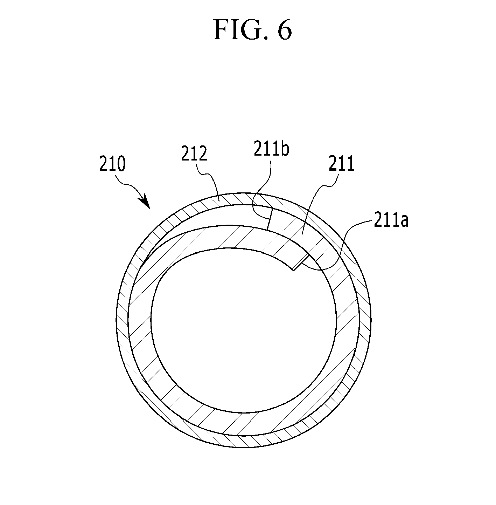

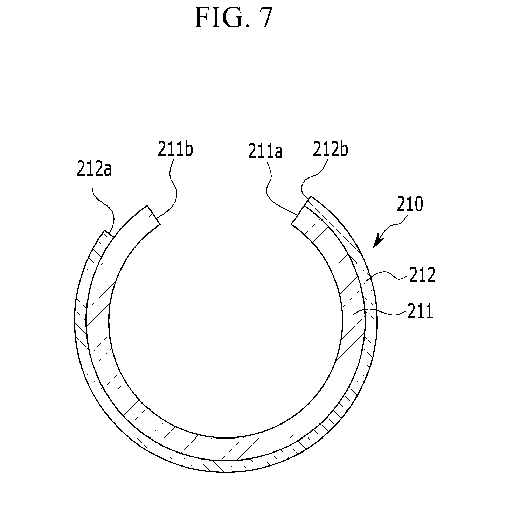

FIG. 6 is a cross-sectional view of a core according to a second exemplary embodiment of the present invention and FIG. 7 is a cross-sectional view of the core in the open state according to the second exemplary embodiment of the present invention.

Referring to FIG. 6 and FIG. 7, a core 210 is formed in the shape of a hollow cylindrical pipe. The core 210 includes a spring member 211 having a cutout portion and a polymer member 212 surrounding the spring member 211.

The spring member 211 is formed in the shape of a pipe having an inner space. The spring member 211 includes a first side end 211a formed at one external circumferential surface and extended a length direction of the spring member 211 and a second side end 211b separated from the first side end 211a and extended in the length direction of the spring member 211.

The polymer member 212 is formed to surround the spring member 211, and is formed of a polymer material dissolved in the electrolyte solution. The polymer member 212 according to the present exemplary embodiment is formed in the shape of an injection-molded pipe. The polymer member 212 may be formed of a material including polysterene.

As shown in FIG. 6, the core 210 is initially inserted in the electrode assembly 110 while the spring member 211 is surrounded by the polymer member 212. In this case, the spring member 211 is pressed by the polymer member 212 and thus be in a compressed state.

For this, the polymer member 212 wholly surrounds the spring member 211, and the spring member 211 is bent with a further larger curvature by the polymer member 212. Here, deformation of the spring member 211 occurs and thus the spring member 211 is bent and lateral side ends are overlapped.

As shown in FIG. 7, when the core 210 is inserted to the rechargeable battery and contacts an electrolyte solution for a predetermined time period, the polymer member 212 is partially dissolved by the electrolyte solution and thus the strength becomes weakened. When the strength of the polymer member 212 becomes further weaker than an elastic force of the spring member 211, the polymer member 212 is torn and thus the spring member 211 cannot be supported. In this case, a gap is formed in the polymer member 212, and a first external circumference end 212a and a second external circumference end 212b separated from the first external circumference end 212a are formed in the external circumference.

The spring member 211 is determined such that the gap between the first side end 211a and the second side end 211b is increased due to the breakage of the polymer member 212. In this case, the spring member 211 is spread with a smaller curvature than when being initially inserted and thus presses the electrode assembly 110.

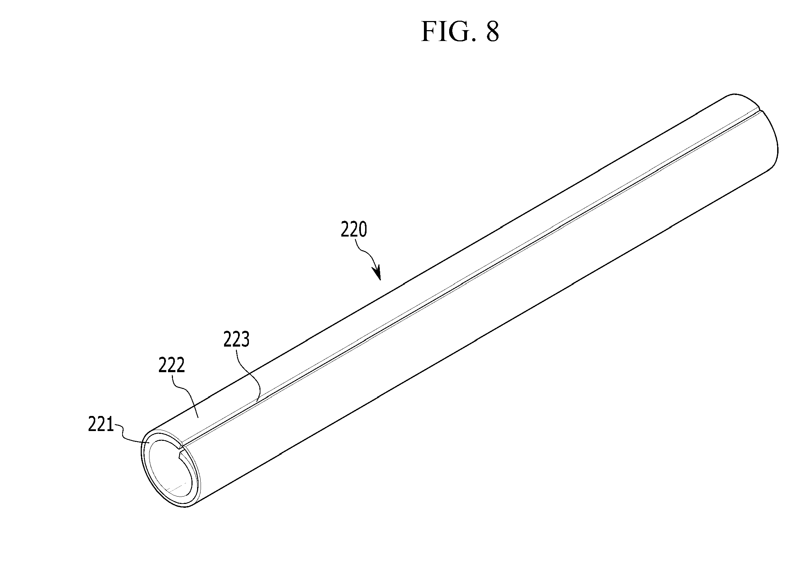

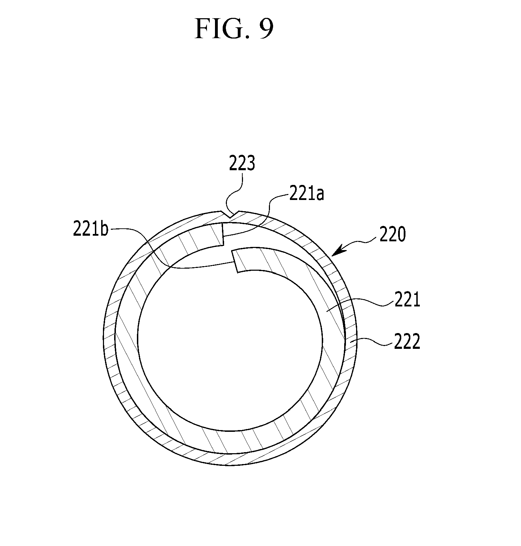

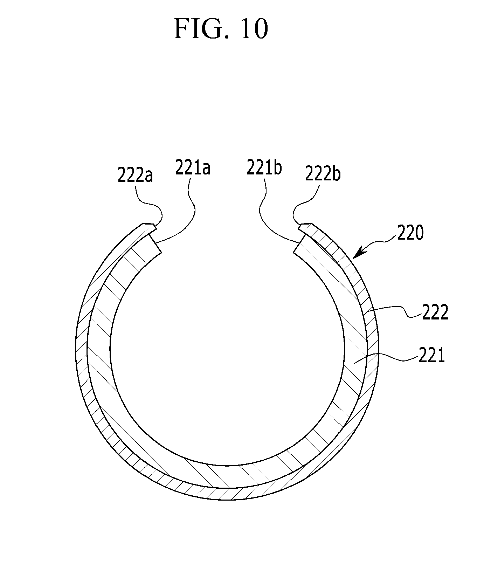

FIG. 8 is a perspective view of a core according to a third exemplary embodiment of the present invention, FIG. 9 is a cross-sectional view of the core according to the third exemplary embodiment of the present invention, and FIG. 10 is the core in the open state according to the third exemplary embodiment of the present invention.

Referring to FIG. 8 to FIG. 10, a core 220 is formed in the shape of a cylindrical hollow pipe. The core 220 includes a spring member 221 having a cutout portion and a polymer member 222 surrounding the spring member 221. The spring member 221 is formed in the shape of a pipe having an inner space.

The spring member 221 includes a first side end 221a formed at one external circumferential surface and extended a length direction of the spring member 221 and a second side end 221b separated from the first side end 221a and extended in the length direction of the spring member 221. The first side end 221 a and the second side end 221b are separated and thus a cutout portion is formed.

The polymer member 222 is formed to surround the spring member 221, and the polymer member 222 is formed in the shape of an injection-molded circular pipe. A notch 223 extended in a length direction of the polymer member 222 is formed in the external circumferential surface of the polymer member 222.

As shown in FIG. 9, the core 220 is initially inserted in the electrode assembly while the spring member 221 is surrounded by the polymer member 222. In this case, the spring member 221 is pressed by the polymer member 222 and thus be in a compressed state. For this, the polymer member 222 wholly surrounds the spring member 221, and the spring member 221 is bent with a further larger curvature by the polymer member 222.

As shown in FIG. 10, when the core 220 is inserted to the rechargeable battery and contacts an electrolyte solution for a predetermined time period, the polymer member 222 is partially dissolved by the electrolyte solution and thus the strength becomes weakened. When the strength of the polymer member 222 becomes further weaker than an elastic force of the spring member 221, the polymer member 222 is torn and thus the spring member 221 cannot be supported.

In this case, a gap is formed in the polymer member 222, and a first external circumference end 222a and a second external circumference end 222b separated from the first external circumference end 222a are formed in the external circumference.

The spring member 221 is determined such that the gap between the first side end 221a and the second side end 221b is increased due to the breakage of the polymer member 222. In this case, the spring member 221 is spread with a smaller curvature than when being initially inserted and thus presses the electrode assembly.

Here, the polymer member 222 is formed of a polymer material having a predetermined thickness for forming the notch, and accordingly, the polymer member 222 can support the shape of the spring member 221. The polymer member 222 has elasticity such that the polymer member 222 can prevent deformation of the spring member 221 and transmit an elastic force that makes the spring member 221 spread to the electrode assembly.

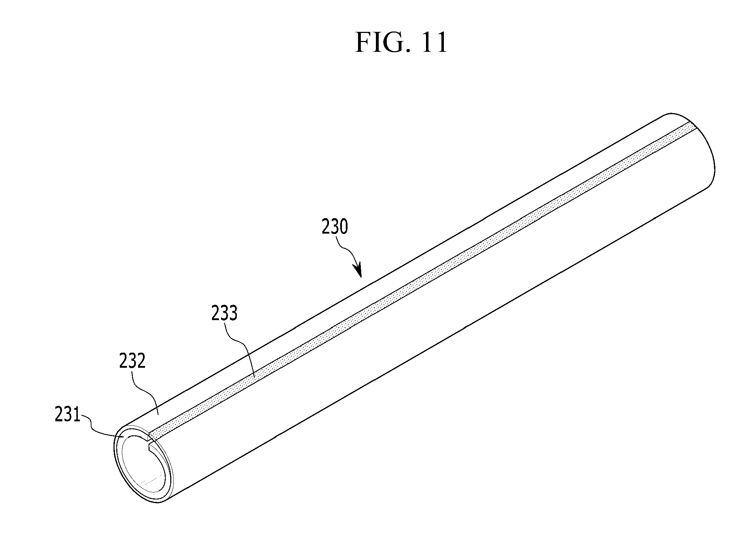

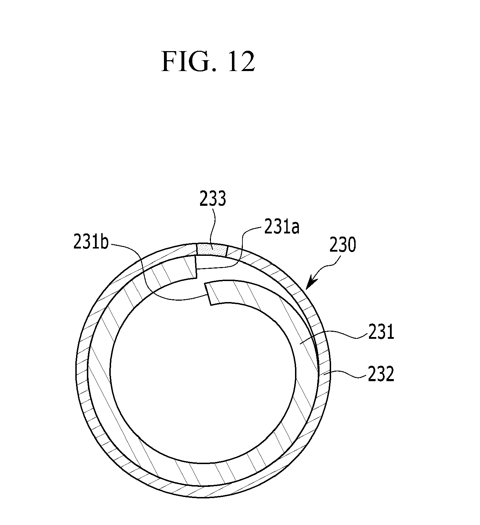

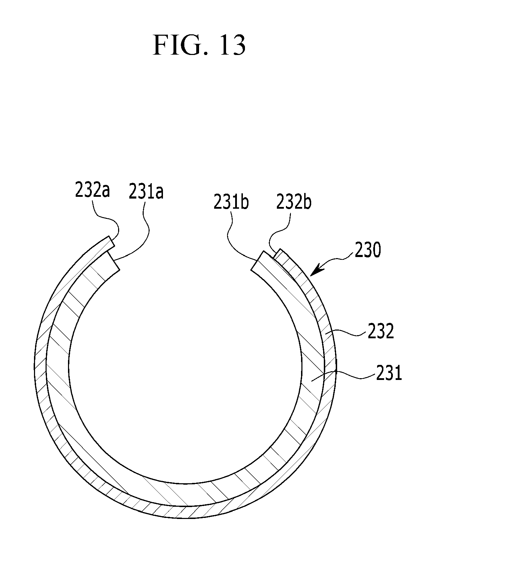

FIG. 11 a perspective view of a core according to a fourth exemplary embodiment of the present invention, FIG. 12 is a cross-sectional view of the core according to the fourth exemplary embodiment of the present invention, and FIG. 13 is a cross-sectional view of the core in the open state according to the fourth exemplary embodiment of the present invention.

Referring to FIG. 11 to FIG. 13, a core 230 is formed in the shape of a cylindrical hollow pipe. The core 230 includes a spring member 231 having a cutout portion and a polymer member 232 surrounding the spring member 231. The spring member 231 is formed in the shape of a pipe having an inner space. The spring member 231 includes a first side end 231a formed at one external circumferential surface and extended a length direction of the spring member 231 and a second side end 231b separated from the first side end 231a and extended in the length direction of the spring member 231. The first side end 231a and the second side end 231b are separated and thus the cutout portion is formed.

The polymer member 232 is formed to surround the spring member 231, and the polymer member 232 is formed in the shape of an injection-molded circular pipe. A dissolving unit 223 extended in a length direction of the polymer member 232 is formed in the external circumferential surface of the polymer member 232.

The polymer member 232 is formed of elastic polymer, and may be formed of a material that does not react with the electrolyte solution, such as polyethylene, polypropylene, EPDM, and the like. In addition, the dissolving unit 223 is extended to a length direction of the polymer member 232 and bonded to both ends of the polymer member 232, and may be formed of polystyrene that is easily dissolved to the electrolyte solution.

As shown in FIG. 12, the core 230 is initially inserted in the electrode assembly while the spring member 231 is surrounded by the polymer member 232. In this case, the spring member 231 is pressed by the polymer member 232 and thus be in a compressed state. For this, the polymer member 232 wholly surrounds the spring member 231, and the spring member 231 is bent with a further larger curvature by the polymer member 232.

As shown in FIG. 13, when the core 230 is inserted to the rechargeable battery and contacts an electrolyte solution for a predetermined time period, the dissolving unit 233 is dissolved by the electrolyte solution and a gap is formed in the polymer member 232. In this case, a first external circumference end 232a and a second external circumference end 232b separated from the first external circumference end 232a are formed in the external circumference.

The spring member 231 is determined such that the gap between the first side end 231a and the second side end 231b is increased due to the breakage of the polymer member 232. In this case, the spring member 231 is spread with a smaller curvature than when being initially inserted and thus presses the electrode assembly.

Since the polymer member 232 is formed of an elastic polymer material, the polymer member 232 has a certain degree of strength and thus the polymer member 232 can support the shape of the spring member 231.

Further, the polymer member 232 has elasticity such that the polymer member 232 can prevent deformation of the spring member 231 and transmit an elastic force that makes the spring member 231 spread to the electrode assembly.

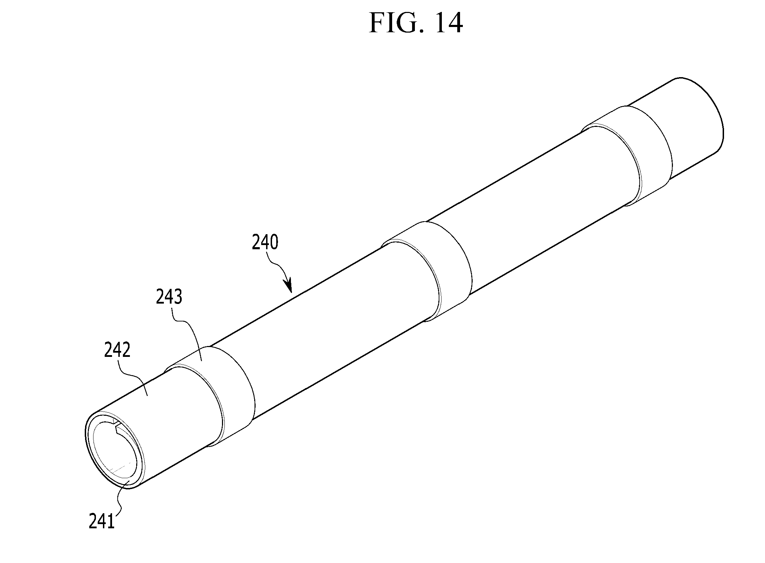

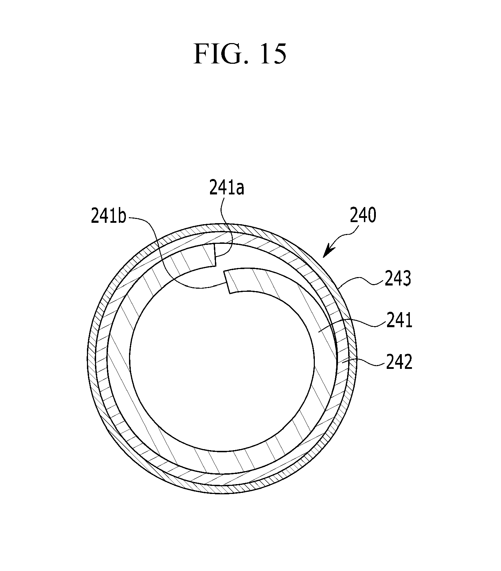

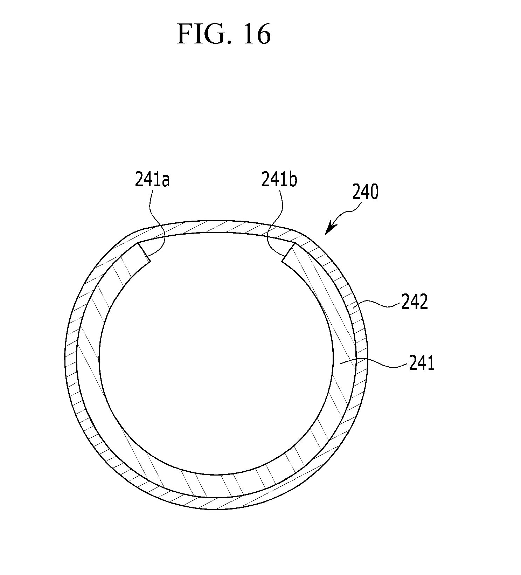

FIG. 14 is a perspective view of a core according to a fifth exemplary embodiment of the present invention, FIG. 15 is a cross-sectional view of the core according to the fifth exemplary embodiment of the present invention, and FIG. 16 is a cross-sectional view of the core in the open state according to the fifth exemplary embodiment of the present invention.

Referring to FIG. 14 to FIG. 16, a core 240 is formed in the shape of a cylindrical hollow pipe. The core 240 includes a springing member 241, a polymer member 242 surrounding the spring member 241, and a band-shaped support member 243 surrounding the polymer member 242.

The spring member 241 is formed in the shape of a pipe having an inner space. The spring member 241 includes a first side end 241a formed at one external circumferential surface and extended a length direction of the spring member 241 and a second side end 241b separated from the first side end 241a and extended in the length direction of the spring member 241. The first side end 221 a and the second side end 221 b are separated and thus a cutout portion is formed.

The polymer member 242 is formed to surround the spring member 241, and is formed of an elastic and flexible film. The polymer member 242 is formed of elastic polymer, and may be formed of a material that does not react with an electrolyte solution, such as polyethylene, polypropylene, EPDM, and the like.

A support member 243 is formed in the shape of a band partially surrounding the polymer member 242, and a plurality of support members 243 are disposed at a distance from each other in the external circumference surface of the polymer member 242. In addition, the support member may be formed as a film that is formed of polystyrene that is easily dissolved in the electrolyte solution.

As shown in FIG. 15, the core 240 is initially inserted in the electrode assembly while the spring member 241 is surrounded by the polymer member 242. In this case, the spring member 241 is pressed by the support member 243 through the polymer member 242 such that the spring member 241 is in the compressed state.

As shown in FIG. 16, the core 240 is inserted into the rechargeable battery and thus contacts the electrolyte solution, the support member 243 is dissolved by the electrolyte solution. Then, a pressure applied to the spring member 241 is eliminated, the spring member 241 is deformed and thus a gap formed between the first side end 241 and the second side end 241 is increased. In addition, the polymer member 242 is extended and thus supports the spring member 241.

In this case, the spring member 241 is spread with a smaller curvature than when being initially inserted and thus presses the electrode assembly. The polymer member 242 can press the electrode assembly by transmitting elastic force that makes the spring member 241 spread to the electrode assembly while supporting the spring member 241.

### <Description of symbols>

100: rechargeable battery
110: electrode assembly
112: positive electrode
113: negative electrode
112a: uncoated region of positive electrode
113a: uncoated region of negative electrode
114: separator
120: case
123: beading portion
125: clamping portion
132: negative current collecting plate
138: positive current collecting plate
140: cap assembly
141: positive temperature coefficient element
142: vent plate
143: cap plate
143a: exhaust
145: insulator
146: middle plate
147: sub-plate
151: lead portion
152: gasket
160, 210, 220, 230, 240: core
161, 211, 221, 231, 241: spring member
161 a, 211 a, 221 a, 231 a, 241 a: spring member's first side end
161 b, 211 b, 221 b, 231 b, 241 b: spring member's second side end
162, 212, 222, 232, 242: polymer member
162a, 212a, 222a, 232a: first external circumference end of polymer member
162b, 212b, 222b, 232b: second external circumference end of polymer member
223: notch
233: dissolving unit
243: support member

## Claims

1. Core (160, 210, 220, 230, 240) for insertion into an electrode assembly (110), the core comprising a spring member (161, 211, 221, 231, 241) and being
**characterized by**
at least one pressing member (162, 212, 222, 232, 243) pressing the spring member (161, 211, 221, 231, 241) into a compressed state, said pressing member (162, 212, 222, 232, 243) being formed at least partly of a material which dissolves in an electrolyte solution.

2. Core (160, 210, 220, 230, 240) of claim 1 wherein the spring member (161, 211, 221, 231, 241) is bent in a larger curvature by the pressing member (162, 212, 222, 232,243).

3. Core (160, 210, 220, 230, 240) of claim 1 or 2 wherein the spring member (161, 211, 221, 231, 241) is formed in a shape of a hollow pipe having an inner space and a cutout portion extended in a length direction of the spring member (161, 211, 221, 231,241).

4. Core (160, 210, 220, 230, 240) of claim 3 wherein the cut-out portion of the spring member (161, 211, 221, 231, 241) is formed by a first side end (161a, 211a, 221a, 231a, 241a) of the spring member formed at one external circumferential surface and extended in the length direction and a second side end (161 b, 211 b, 221 b, 231 b, 241 b) of the spring member separated from the first side end (161a, 211a, 221a, 231a, 241a) and extended in the length direction.

5. Core (160, 210, 220, 240) of one of claims 1-4 wherein the pressing member (162, 212, 222, 242) surrounds the external circumference of the spring member (161, 211,221,241).

6. Core (160, 210, 220, 230, 240) of one of claims 1-5 wherein the material which dissolves in an electrolyte solution is a polymer material which comprises polystyrene.

7. Core (160, 210, 220, 230, 240) of claim 6 wherein the polystyrene is oriented polystyrene.

8. Core (160) of one of claims 1-7 wherein the pressing member (162) is formed as a tape having adhesive interior and exterior surface, the adhesive interior surface being attached to the spring member (161) and the adhesive exterior surface being dedicated to attachment to the electrode assembly (110).

9. Core (230) of one of claims 1-7 wherein the pressing member comprises a polymer member which does not react to the electrolyte solution and a dissolving unit (233) extending along a length direction of the pressing member (232), the dissolving unit (233) comprising the material which dissolves in an electrolyte solution.

10. Core (240) of one of claims 1-7 wherein the pressing member comprises a polymer member which is formed of an elastic and flexible film and does not react to an electrolyte solution, and at least one support member (243) comprising the material which dissolves in an electrolyte solution and being formed in the shape of a band partially surrounding the polymer member (242).

11. Core (210, 220) of one of claims 1-7 wherein the pressing member (212, 222, 232) is formed in the shape of molded pipe.

12. Core (220) of one of claims 1-7 and 11 wherein a notch (223) is extending along a length direction of the pressing member (222).

13. Rechargeable battery (100) comprising an electrode assembly (110) including a positive electrode (112), a negative electrode (113) and a separator 114, a case (120) having a space in which the electrode assembly (110) is installed, **characterized by** a core (160, 210, 220, 230, 240) according to one of the preceding claims being inserted into the electrode assembly (110).

14. Rechargeable battery (100) of claim 13 wherein the positive electrode (112), the separator (114), and the negative electrode (113) are stacked and wound in a spiral or prismatic shape such that a space is formed in the center of the electrode assembly (110), the core (160, 210, 220, 230, 240) being provided in said space.

## Patentansprüche

1. Kern (160, 210, 220, 230, 240) zum Einsetzen in eine Elektrodenanordnung (110), wobei der Kern ein Federelement (161, 211, 221, 231, 241) aufweist und
**gekennzeichnet ist durch**
zumindest ein Presselement (162, 212, 222, 232, 243), das das Federelement (161, 211, 221, 231, 241) in einen komprimierten Zustand presst, wobei das besagte Presselement (162, 212, 222, 232, 243) zumindest teilweise aus einem Material ausgebildet ist, das sich in einer Elektrolytlösung löst.

2. Kern (160, 210, 220, 230, 240) nach Anspruch 1, wobei das Federelement (161, 211, 221, 231, 241) vom Presselement (162, 212, 222, 232, 243) in einer größeren Krümmung gebogen wird.

3. Kern (160, 210, 220, 230, 240) nach Anspruch 1 oder 2, wobei das Federelement (161, 211, 221, 231, 241) in Form eines hohlen Rohrs, das einen Innenraum und einen Ausschnittsbereich, der sich in eine Längsrichtung des Federelements (161, 211, 221, 231, 241) erstreckt, aufweist.

4. Kern (160, 210, 220, 230, 240) nach Anspruch 3, wobei der Ausschnittsbereich des Federelements (161, 211, 221, 231, 241) von einem ersten Seitenende (161a, 211a, 221a, 231a, 241a) des Federelements, das auf einer Außenumfangsfläche ausgebildet ist und sich in die Längsrichtung erstreckt, und einem zweiten Seitenende (161b, 221b, 221b, 231b, 241b) des Federelements, das vom ersten Seitenende (161a, 211 a, 221 a, 231 a, 241 a) getrennt ist und sich in die Längsrichtung erstreckt, ausgebildet wird.

5. Kern (160, 210, 220, 240) nach einem der Ansprüche 1-4, wobei das Presselement (162, 212, 222, 242) den Außenumfang des Federelements (161, 211, 221, 241) umgibt.

6. Kern (160, 210, 220, 230, 240) nach einem der Ansprüche 1-5, wobei das Material, das sich in einer Elektrolytlösung auflöst, ein Polymermaterial ist, das Polystyrol aufweist.

7. Kern (160, 210, 220, 230, 240) nach Anspruch 6, wobei das Polystyrol orientiertes Polystyrol ist.

8. Kern (160) nach einem der Ansprüche 1-7, wobei das Presselement (162) als ein Band, das eine klebende Innen- und Außenfläche aufweist, ausgebildet ist, wobei die klebende Innenfläche am Federelement (161) befestigt ist und die klebende Außenfläche zum Befestigen an der Elektrodenanordnung (110) bestimmt ist.

9. Kern (230) nach einem der Ansprüche 1-7, wobei das Presselement ein Polymerelement, das nicht mit der Elektrolytlösung reagiert, und eine Lösungseinheit (233), die sich entlang einer Längsrichtung des Presselements (232) erstreckt, aufweist, wobei die Lösungseinheit (233) das Material, das sich in einer Elektrolytlösung löst, aufweist.

10. Kern (240) nach einem der Ansprüche 1-7, wobei das Presselement ein Polymerelement, das aus einem elastischen und flexiblen Film ausgebildet ist und nicht mit einer Elektrolytlösung reagiert, und zumindest ein Trägerelement (243), das das Material, das sich in einer Elektrolytlösung löst, aufweist und in Form eines Bandes, das das Polymerelement (242) teilweise umgibt, ausgebildet ist, aufweist.

11. Kern (210, 220) nach einem der Ansprüche 1-7, wobei das Presselement (212, 222, 232) in Form eines Formrohrs ausgebildet ist.

12. Kern (220) nach einem der Ansprüche 1-7 und 11, wobei sich eine Kerbe (223) entlang einer Längsrichtung des Presselements (222) erstreckt.

13. Wiederaufladbare Batterie (100), aufweisend eine Elektrodenanordnung (110), die eine positive Elektrode (112), eine negative Elektrode (113) und einen Separator 114 aufweist, ein Gehäuse (120), das einen Raum, in dem die Elektrodenanordnung (110) angebracht ist, aufweist, **gekennzeichnet durch** einen Kern (160, 210, 220, 230, 240) nach einem der vorhergehenden Ansprüche, der in die Elektrodenanordnung (110) eingesetzt ist.

14. Wiederaufladbare Batterie (100) nach Anspruch 13, wobei die positive Elektrode (112), der Separator (114) und die negative Elektrode (113) gestapelt sind und in einer Spiralform oder prismatischen Form gewickelt sind, derart, dass ein Raum in der Mitte der Elektrodenanordnung (110) ausgebildet wird, wobei der Kern (160, 210, 220, 230, 240) im besagten Raum bereitgestellt wird.

## Revendications

1. Noyau (160, 210, 220, 230, 240) destiné à être inséré dans un ensemble d'électrodes (110), le noyau comprenant un élément de ressort (161, 211, 221, 231, 241), et étant
**caractérisé par** :
au moins un élément de pression (162, 212, 222, 232, 243) comprimant l'élément de ressort (161, 211, 221, 231, 241) dans un état comprimé, ledit élément de compression (162, 212, 222, 232, 243) étant formé au moins partiellement avec un matériau qui se dissout dans une solution d'électrolyte.

2. Noyau (160, 210, 220, 230, 240) selon la revendication 1, dans lequel l'élément de ressort (161, 211, 221, 231, 241) est plié selon une plus grande courbure par l'élément de pression (162, 212, 222, 232, 243).

3. Noyau (160, 210, 220, 230, 240) selon la revendication 1 ou 2, dans lequel l'élément de ressort (161, 211, 221, 231, 241) est formé selon une forme d'un tuyau creux ayant un espace interne et une partie découpée étendue dans le sens de la longueur de l'élément de ressort (161, 211, 221, 231, 241).

4. Noyau (160, 210, 220, 230, 240) selon la revendication 3, dans lequel la partie découpée de l'élément de ressort (161, 211, 221, 231, 241) est formée par une première extrémité latérale (161a, 211a, 221a, 231a, 241a) de l'élément de ressort formée au niveau d'une surface circonférentielle externe et étendue dans le sens de la longueur et une seconde extrémité latérale (161b, 211b, 221b, 231b, 241b) de l'élément de ressort séparée de la première extrémité latérale (161a, 211a, 221a, 231a, 241a) et étendue dans le sens de la longueur.

5. Noyau (160, 210, 220, 240) selon l'une des revendications 1 à 4, dans lequel l'élément de pression (162, 212, 222, 242) entoure la circonférence externe de l'élément de ressort (161, 211, 221, 241).

6. Noyau (160, 210, 220, 230, 240) selon l'une des revendications 1 à 5, dans lequel le matériau qui se dissout dans une solution d'électrolyte est un matériau polymère qui comprend du polystyrène.

7. Noyau (160, 210, 220, 230, 240) selon la revendication 6, dans lequel le polystyrène est du polystyrène orienté.

8. Noyau (160) selon l'une des revendications 1 à 7, dans lequel l'élément de pression (162) est formé comme une bande ayant des surfaces intérieure et extérieure adhésives, la surface intérieure adhésive étant fixée sur l'élément de ressort (161) et la surface extérieure adhésive étant dédiée à la fixation sur l'ensemble d'électrodes (110).

9. Noyau (230) selon l'une des revendications 1 à 7, dans lequel l'élément de pression comprend un élément polymère qui ne réagit pas à la solution d'électrolyte et une unité de dissolution (233) s'étendant le long du sens de la longueur de l'élément de pression (232), l'unité de dissolution (233) comprenant le matériau qui se dissout dans une solution d'électrolyte.

10. Noyau (240) selon l'une des revendications 1 à 7, dans lequel l'élément de pression comprend un élément polymère qui est formé avec un film élastique et flexible et ne réagit pas à une solution d'électrolyte, et au moins un élément de support (243) comprenant le matériau qui se dissout dans la solution d'électrolyte et étant formé selon la forme d'une bande entourant partiellement l'élément polymère (242).

11. Noyau (210, 220) selon l'une des revendications 1 à 7, dans lequel l'élément de pression (212, 222, 232) est formé selon la forme d'un tuyau moulé.

12. Noyau (220) selon l'une des revendications 1 à 7 et 11, dans lequel une encoche (223) s'étend le long du sens de la longueur de l'élément de pression (222).

13. Batterie rechargeable (100) comprenant un ensemble d'électrodes (110) comprenant une électrode positive (112), une électrode négative (113) et un séparateur (114), un boîtier (120) ayant un espace dans lequel l'ensemble d'électrodes (110) est installé, **caractérisée par** un noyau (160, 210, 220, 230, 240) selon l'une des revendications précédentes, qui est inséré dans l'ensemble d'électrodes (110).

14. Batterie rechargeable (100) selon la revendication 13, dans laquelle l'électrode positive (112), le séparateur (114) et l'électrode négative (113) sont empilés et enroulés selon une forme en spirale ou prismatique de sorte qu'un espace est formé dans le centre de l'ensemble d'électrodes (110), le noyau (160, 210, 220, 230, 240) étant prévu dans ledit espace.
